# EUROPÄISCHE PATENTSCHRIFT

(11) **EP 1 682 750 B1**
(45) Veröffentlichungstag und Bekanntmachung des Hinweises auf die Patenterteilung: **28.11.2012**
(21) Anmeldenummer: 04791336.3
(22) Anmeldetag: 28.10.2004
(51) Int. Cl.: F01K 23/10, F01K 21/04, F02C 7/143

(54) **KRAFTWERKSANLAGE**
POWER PLANT
CENTRALE ELECTRIQUE

(30) Priorität: 30.10.2003 CH 185703
(43) Veröffentlichungstag der Anmeldung: 26.07.2006
(73) Patentinhaber: Alstom Technology Ltd, 5400 Baden (CH)
(72) Erfinder: FERRARI, Flavio, I-20159 Milano (IT); JIMENEZ, HÄRTEL, Carlos, 81247 München (DE); KLAESSON, Daniel, S-83001 Hallen (SE); SAVIC, Sasha, CH-5430 Wettingen (CH)
(86) Internationale Anmeldenummer: PCT/EP2004/052708
(87) Internationale Veröffentlichungsnummer: WO 2005/042929

(56) Entgegenhaltungen:
- DE-A- 10 150 087
- PATENT ABSTRACTS OF JAPAN Bd. 005, Nr. 105 (M-077), 8. Juli 1981 (1981-07-08) & JP 56 047625 A (OSAKA GAS CO LTD), 30. April 1981 (1981-04-30)

## Beschreibung

### Technisches Gebiet

Die vorliegende Erfindung betrifft eine Kraftwerksanlage gemäss dem Oberbegriff des Anspruchs 1, sowie ein bevorzugtes Betriebsverfahren.

Eine solche Kraftwerksanlage ist zum Beispiel aus dem Dokument JP 56 047625-A bekannt.

Weiterhin ist es im Stand der Technik beispielsweise aus der DE 25 49 790 wohlbekannt, eine Flüssigkeit in den Ansaugtrakt von Verbrennungskraftmaschinen, wie beispielsweise Gasturbogruppen, einzudüsen. Durch die Verdunstung der Flüssigkeit wird die Ansaugluft abgekühlt, und die Leistung erhöht. Der Effekt lässt sich weiter steigern, wenn der eingespritzte Flüssigkeitsmassenstrom so gross gewählt ist, dass die Ansaugluft diesen nicht mehr aufzunehmen vermag, also mit Flüssigkeit übersättigt wird, derart, dass wenigstens ein Teil der Flüssigkeit erst während der Verdichtung verdampft. Wenn also Flüssigkeitstropfen in den weitgehend adiabaten Turboverdichter einer Gasturbogruppe eindringen, so resultiert aus der Verdunstung im Verdichter eine intensive Innenkühlung, und die Leistungsaufnahme des Verdichters wird verringert, was die Netto-Leistungsabgabe der Gasturbogruppe signifikant zu erhöhen vermag. Dieses Verfahren ist unter anderem als "Overfogging" oder "Wet Compression" bekanntgeworden. Daneben wird die reine Verdunstungskühlung der Ansaugluft durch eingespritzte Flüssigkeitstropfen als "Fogging" bezeichnet.

Bereits in der FR 1,563,749 ist die Zerstäubungsgüte als kritische Grösse für die Durchführung eines derartigen Verfahrens beschrieben. Im Stand der Technik werden hierzu einerseits in der EP 781909 luftunterstützte Zerstäuberdüsen vorgeschlagen. Deren Nachteil ist der Verbrauch an verdichteter Luft, welcher die erschliessbaren Leistungspotenziale wiederum vermindert. Weiterhin werden beispielsweise in US 4,731,909 Ultraschall-Zerstäuber beschrieben. In der praktischen Anwendung finden aufgrund der Einfachheit Druckzerstäuberdüsen Anwendung, oder auch die sogenannte Swirl-Flash-Technologie, die aus der WO 9967519 bekanntgeworden ist. Für die Druckzerstäubung werden hohe Flüssigkeitsdrücke benötigt, die üblicherweise eine Grössenordnung von 50 bar deutlich überschreiten, und durchaus 100 bis über 150 bar erreichen. Dabei werden Massenströme von einigen % des Luftmassenstroms gefördert; eine typische Grössenordnung bei heute üblichen Gasturbogruppen mit Leistungen von 150 MW und mehr liegt bei rund 50 kg/s Wasser, wobei diese Zahl beliebig nach oben abweichen kann. Daraus wird die Grösse der benötigten Wasserpumpen deutlich, welche einen erheblichen Kostenaufwand verursacht. Weiterhin müssen grosse Wassermassenströme geeignet aufbereitet werden.
Zusammenfassend bedingt die Bereitstellung des Flüssigkeitsmassenstroms für die oben beschriebene Flüssigkeitseinspritzung einen erheblichen Komponentenaufwand und verursacht erhebliche Kosten.

### Darstellung der Erfindung

Hier will die Erfindung Abhilfe schaffen. Der in den Ansprüchen gekennzeichneten Erfindung liegt die Aufgabe zugrunde, eine Kraftwerksanlage der eingangs genannten Art anzugeben, welche die Nachteile des Standes der Technik zu vermeiden vermag. Erfindungsgemäss wird diese Aufgabe unter Verwendung der Gesamtheit der Merkmale des Anspruchs 1 gelöst.

Kern der Erfindung ist es also, ohnehin vorhandene Komponenten zur Bereitstellung des notwendigen Druck-Wassermassenstroms zu verwenden. Die Erfindung geht dabei von einer Kombi-Kraftwerksanlage aus, bei der auf an sich bekannte Weise im Abgas-Strömungsweg einer Gasturbogruppe ein Abhitzedampferzeuger angeordnet ist, in dem gespannter Dampf zum Antrieb einer Dampfturbine erzeugt wird. Dabei macht die Erfindung davon Gebrauch, dass der unter Anderem vom Abhitzedampferzeuger und der Dampfturbine gebildete Wasser-Dampf-Kreislauf eine Wasseraufbereitungsanlage sowie wenigstens eine Kesselspeisepumpe oder sonstige Förderpumpen aufweist. Eine Hochdruck-Kesselspeisepumpe stellt zur Erzeugung von Hochdruck-Frischdampf zum Antrieb der Dampfturbine Speisewasser mit Drücken von typischerweise rund 90 bis 150 bar, oder auch darüber, zur Verfügung. Damit verfügt die Kombi-Kraftwerksanlage über geeignete Mittel zur Bereitstellung einer geeigneten Flüssigkeit und eine Förderpumpe zur Aufbereitung und zur Bereitstellung eines hinreichend grossen Flüssigkeitsmassenstroms bei hinreichend hohem Druck. Dies macht sich die Erfindung zunutze indem stromab einer Förder- oder Speisepumpe an einer Stelle geeigneten Druckes eine Zuführleitung aus dem Wasser-Dampf-Kreislauf abzweigt, welche zu der eingangs erwähnten Zerstäubungsvorrichtung im Ansaugtrakt der Gasturbogruppe führt. Bevorzugt ist in der Zuführleitung wenigstens ein Absperr- und Drosselorgan angeordnet. Dabei kann es sich um ein getrenntes Absperrorgan und ein Druckregelventil handeln.

Eine derartige Abzweigung kann vergleichsweise einfach installiert werden, da die Rohrleitungen eines Wasser-Dampf-Kreislaufes üblicherweise eine Vielzahl von Zugangsstellen aufweisen, die beispielsweise der Probenentnahme dienen, und die im Normalbetrieb mit Blindflanschen oder auch mit Absperrorganen abgesperrt sind. Hier kann selbstverständlich sehr leicht und mit geringem apparativem Zusatzaufwand die erwähnte Zuführleitung für die Zerstäubungsvorrichtung angeordnet werden.

Bekannt sind weiterhin Mehrdruck-Abhitzedampferzeuger, welche mehrere - üblicherweise zwei oder drei - Druckstufen mit jeweils einer Kesselspeisepumpe aufweisen. Es ist in diesem Falle eine Druckstufe geeigneten Druckes zur Anordnung der Abzweigstelle zu wählen.

In einer Ausführungsform zweigt eine Leitung stromauf des Abhitzedampferzeugers aus dem Wasser-Dampf-Kreislauf ab.

In einer weiteren Ausführungsform zweigt eine Leitung innerhalb des Strömungswegs des Abhitzedampferzeugers aus dem Wasser-Dampf-Kreislauf ab. Dabei wird die Abzweigstelle in einer Ausführungsform so gewählt, dass flüssiges Wasser entnommen wird, dessen Zustand mit Vorteil hinreichend weit unterhalb des Siedepunktes liegt. Dies gewährleistet eine maximale Sicherheit gegen Kavitationsschäden. Bei einem Trommelkessel, welcher einen Vorwärmer, eine Trommel mit Verdampfer und einen Überhitzer aufweist ist die Abzweigleitung dann stromauf der Trommel im Vorwärmer oder spätestens an der Trommel angeordnet. Im letzteren Falle muss aber berücksichtigt werden, dass das abgezweigte Wasser Sattwasser ist, so, dass eine geringe Druckabnahme zu spontanen Sieden führt.
Bei einem Eindurchlauferhitzer der an sich bekannten trommellosen Bauart wird das Speisewasser in einem Durchlauf und im Wesentlichen in einem Rohrzug erwärmt, verdampft, und überhitzt. Die Abzweigestelle ist dann so zu wählen, dass sie stromauf der Stelle angeordnet ist, an welcher erstmals Sieden auftritt.

In einer weiteren Ausführungsform sind zwei Abzweigeleitungen an zwei unterschiedlichen Stellen des Wasser-Dampf-Kreislaufs angeordnet, bevorzugt derart, dass Wasser unterschiedlicher Temperaturen entnommen wird.
Beispielsweise ist eine erste Abzweigleitung stromauf des Abhitzedampferzeugers angeordnet, und eine zweite im Strömungsweg des Abhitzedampferzeugers. Beide Abzweigleitungen münden mittelbar, beispielsweise über einen Sammler oder einen Mischvorwärmer, oder unmittelbar in einer gemeinsamen zur Zerstäubungsvorrichtung leitenden Zuführleitung. Vorzugsweise weist wenigstens eine der beiden Abzweigleitungen ein Absperr- oder Drosselorgan auf. Dies ermöglicht eine variable Einstellung der Temperatur des in die Ansaugluft einzudüsenden Wassers, das der Einspritzvorrichtung zugeführt wird, oder eine Regelung auf einen Temperatursollwert.

Eine Ausführungsform mit regelbarer Medientemperatur wird in einer weiteren vorteilhaften Ausführungsform realisiert, indem eine erste Abzweigstelle an einer Stelle angeordnet wird, an der flüssiges Wasser entnommen wird, insbesondere stromauf des ersten Abhitzedampferzeugers. Die zweite Abzweigstelle ist stromab angeordnet, und zwar an einer Stelle des Wasser-Dampf-Kreislaufes, an der Dampf vorliegt; es kann sich bei entsprechenden Druckverhältnissen auch um eine Zwischenanzapfung der Dampfturbine handeln. Selbstverständlich ist mit Vorteil die Dampfentnahme regel- und/oder absperrbar gehalten. Der entnommene Dampf wird sodann als Heizmedium für das stromauf entnommene Wasser verwendet, und dient zu dessen Vorwärmung zum Beispiel in einem Mischvorwärmer, dessen Abströmung in der Zuführleitung der Zerstäubungsvorrichtung mündet.

Die Regelung der Temperatur des Einspritzwassers auf einen konstanten Temperatursollwert kann einerseits verwendet werden, um unterschiedliche thermische Dehnungen der Einspritzvorrichtung zu vermeiden oder zu begrenzen.

Die vorstehend beschriebenen bevorzugten Ausführungsformen eignen sich ebenfalls hervorragend zur Verwendung in Verbindung mit sogenannten "Swirl Flash" Eindüsungsvorrichtungen, wie sie aus WO 9967519 bekannt sind. Dabei wird mit Vorteil die Temperatur des in die Ansaugluft einzudüsenden Wassers als Regelgrösse für die Regelung der Anteile des vorgewärmten und nichtvorgewärmten Wassers herangezogen, und diese Temperatur wird auf einen Sollwert geregelt, der beispielsweise bei 200°C liegt, wobei sich das Wasser selbstverständlich unter Druck befindet.

Die regelbare Vorwärmung des einzuspritzenden Wassers kann aber auch ganz besonders vorteilhaft zur Verhinderung von Eisbildung am Verdichtereintritt verwendet werden. Eisbildung im Verdichtereintritt kann einerseits bei bestimmten Umgebungstemperatur- und Feuchtebereichen auftreten, aber auch, wenn die Leistungssteigerung durch sogenanntes Overfogging, also die Verdampfpung von Tropfen während der Verdichtung, bei Umgebungszuständen erwünscht ist, welche an sich noch keine Eisbildungsgefahr bergen, bei denen aber die blosse Verdunstungskühlung der Ansaugluft eine Abkühlung bis zur potenziellen Eisbildung bewirkt. Dabei wird in einer Ausführungsform die Temperatur im Zuströmkanal der Gasturbogruppe, möglichst nahe am Verdichtereinlauf, gemessen, und auf einen Mindestwert oder Sollwert eingeregelt, indem bei anderweitig, beispielsweise durch einen Leistungsregler der Gasturbogruppe, vorgegebenem Wassereinspritzmassenstrom das Massenstromverhältnis des ersten, kühleren oder nicht vorgewärmtem Wasser-Teilstroms zu dem zweiten Teilstrom von wärmerem Wasser oder Dampf abhängig von dieser gemessenen Temperatur variiert wird. Bevorzugt sind beide Teilströme regulierbar, indem die jeweiligen Leitungen drosselbar sind. Wenn die Temperatur am Verdichtereintritt oberhalb des Sollwertes liegt, wird der zweite, wärmere Teilstrom gedrosselt und damit der Anteil des kühleren Wassers erhöht. Die Temperatur des in die Ansaugluft eingedüsten Wassers und damit der Ansaugluft am Verdichtereintritt sinkt demnach. Bei sehr hohen Umgebungstemperaturen und hoher Umgebungsfeuchte, wenn also der Verdunstungskühlungseffekt keine sehr niedrige Verdichtereintrittstemperatur zu bewirken vermag, entspricht der erste kühlere Massenstrom dem gesamten Massenstrom der Zerstäubungsvorrichtung. Umgekehrt kann bei Unterschreiten einer Solltemperatur am Verdichtereintritt der relative Anteil des zweiten wärmeren Massenstroms erhöht werden, um somit gegebenenfalls der Eisbildung vorzubeugen. Der Gesamtmassenstrom wird beispielsweise durch die Leistungsregelung der Gasturbogruppe unabhängig vom oben beschriebenen Regelvorgang bestimmt.

In einer weiteren Ausführungsform ist in der Zuführleitung ein Kühler für das einzudüsende Wasser angeordnet. Der Kühler kann alternativ zu einer regelbaren Vorwärmung oder auch zusätzlich angeordnet sein. Der Kühler kann wie oben dargelegt betrieben werden, um das einzudüsende Wasser auf eine konstante Temperatur einzuregeln. Damit können thermische Dehnungen der Einspritzvorrichtung vermieden werden. In einer anderen bevorzugten Betriebsweise mit einem Kühler ist im Zuströmkanal des Verdichters eine Temperaturmessstelle angeordnet. Die Kühlungsleistung des Wassers kann dann so geregelt werden, dass die Temperatur am Verdichtereinlass der Gasturbogruppe möglichst gering ist, was einer maximalen Leistung und einem maximalen Wirkungsgrad der Gasturbogruppe zuträglich ist, und andererseits eine aufgrund potenzieller Eisbildung im Verdichtereinlass zulässige Minimaltemperatur nicht unterschritten wird. Selbstverständlich muss dann auch die Temperatur des Einspritzwassers stromab des Kühlers erfasst werden, und die Kühlungsleistung muss so begrenzt werden, dass diese Temperatur einen gewissen Sicherheitsabstand zum Gefrierpunkt der Flüssigkeit wahrt.

Die im Zusammenhang mit der Erfindung vorgeschlagene Vermischung von vorgewärmten und nicht vorgewärmten Medien weist erhebliche Vorteile gegenüber einer in US 6,216,443 vorgeschlagenen Vermischung innerhalb eines hilfsmedienunterstützten Zerstäubers auf. Einerseits kann die in US 6,216,443 vorgeschlagene Lösung eben nur im Zusammenhang mit hilfsmedienunterstützten Zerstäubern Verwendung finden; die Anwendung in den konstruktiv besonders einfachen Druckzerstäuber- oder Flash-Eindüsungsvorrichtungen verbietet sich von selbst. Weiterhin ermöglicht die im Zusammenhang mit der Erfindung vorgeschlagene Ausführungsform eine Einstellung, Regelung, und Begrenzung der Temperatur der Zerstäubungsflüssigkeit wie auch der Temperatur im Zuströmkanal der Gasturbogruppe.

### Kurze Beschreibung der Zeichnung

Die Erfindung wird nachfolgend anhand von in der Zeichnung illustrierten Ausführungsbeispielen näher erläutert. Im einzelnen zeigen:
Figur 1 eine erste Ausführungsform der Erfindung;
Figur 2 ein Detail der Zerstäubungsvorrichtung;
Figur 3 eine weitere Ausführungsform der Erfindung;
Figur 4 eine Ausführungsform der Erfindung unter beispielhafter Verwendung von Flash-Zerstäubern;
Figuren 5 und 6 weitere alternative Ausführungsform der Erfindung unter beispielhafter Verwendung von Flash-Zerstäubern;
Figur 7 eine weitere vorteilhafte Ausführungsform der Erfindung.

Für das Verständnis der Erfindung nicht unmittelbar notwendige Elemente sind weggelassen. Die Ausführungsbeispiele sind rein instruktiv zu verstehen, und sollen nicht zu einer Einschränkung der in den Ansprüchen gekennzeichneten Erfindung herangezogen werden.

### Weg zur Ausführung der Erfindung

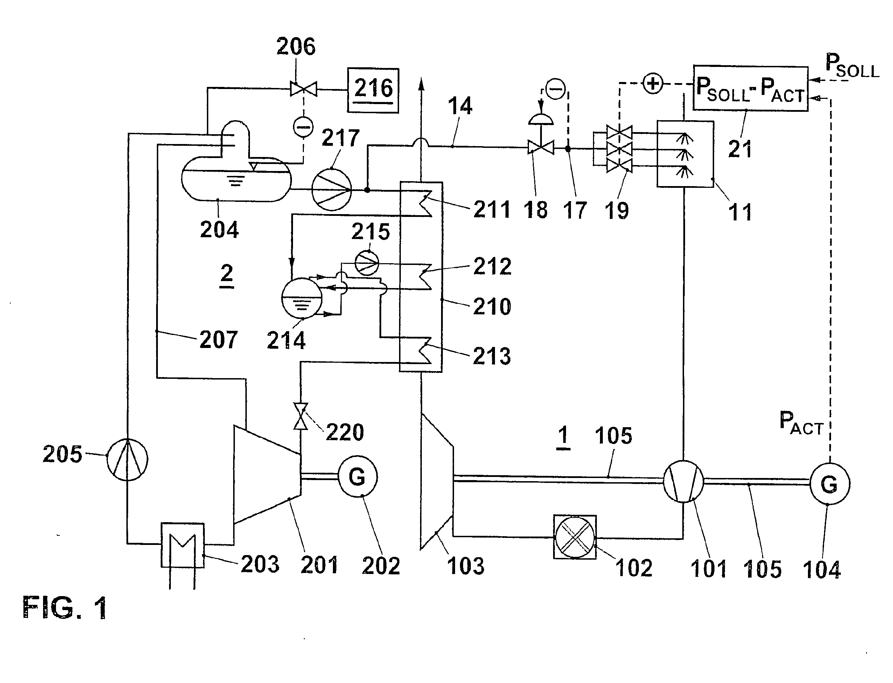

Die in Figur 1 dargestellte Kraftwerksanlage umfasst eine Gasturbogruppe 1 und einen Wasser-Dampf-Kreislauf 2. Die an sich bekannte Gasturbogruppe 1 umfasst einen Verdichter 101, eine Brennkammer 102, eine Turbine 103, sowie einen Generator 104. Die Turbine treibt über eine Welle 105 den Verdichter und den Generator an. Die dargestellte Gasturbogruppe weist weiterhin eine stromauf des Verdichtereinlasses in einem Zuströmkanal angeordnete Einspritz- und Zerstäubungsvorrichtung 11 für eine Flüssigkeit, insbesondere Wasser, auf. Dort eingedüste Flüssigkeit vermag auf zweierlei Weise die Leistung und den Wirkungsgrad der Gasturbogruppe zu erhöhen: Einerseits wird ein Teil der als Tröpfchennebel eingedüsten Flüssigkeit noch im Zuströmkanal verdunstet, wodurch die Verdichteransaugluft gekühlt wird, woraus eine Erhöhung der Dichte der Ansaugluft und des geförderten Massenstroms resultiert. Darüber hinaus in den Verdichter eindringende Flüssigkeitstropfen sorgen weiterhin für eine intensive Innenkühlung im Verdichter, der in der Folge weniger Leistung aufnimmt, so, dass mehr von der Turbinenleistung für den Antrieb des Generators zur Verfügung steht. Eine hinreichend feine Zerstäubung der Flüssigkeit in der Zerstäubungsvorrichtung 11 mit bevorzugt zu verwendenden Druckzerstäuberdüsen, wobei Tropfengrössen unter 50 µm anzustreben sind, erfordert einen hohen Zerstäubungs-Vordruck, der typischerweise im Bereich von rund 30 bis 150 bar, insbesondere 100 bis 150 bar, und auch darüber liegt. Besonders dann, wenn die Tropfen in den Verdichter eindringen sollen, wird stark gereinigtes demineralisiertes Wasser benötigt, um Ablagerungen auf den Verdichterschaufeln zu vermeiden. Nach dem Stand der Technik müssen daher eine Wasseraufbereitungsvorrichtung und eine Pumpe angeordnet werden, die den benötigten demineralisierten Wassermassenstrom bei hinreichend hohem Druck zur Verfügung stellen können. Diese Vorrichtungen begründen einen namhaften Teil der Investitionskosten für eine solche Fogging/Overfogging Installation. Die dargestellte Kraftwerksanlage weist weiterhin einen an sich bekannten Wasser-Dampf-Kreislauf 2 auf. Dieser umfasst einen Abhitzedampferzeuger 210, welcher seinerseits einen Vorwärmer 211, einen Verdampfer 212, einen Überhitzer 213, sowie eine Dampftrommel 214 und eine Umwälzpumpe 215 für den Verdampfer aufweist. Der Abhitzedampferzeuger wird auf an sich wohlbekannte Weise von den Abgasen der Gasturbogruppe durchströmt, und nutzt deren Restwärme zur Dampferzeugung. Die Funktionsweise des Wasser-Dampf-Kreislaufs ist dem Fachmann an sich ebenfalls geläufig: Der erzeugte Dampf wird über das Frischdampf-Regelventil 220 einer Dampfturbine 201 zugeleitet und dort zum Antrieb eines Generators 202 entspannt. Das Frischdampf-Regelventil wird auf an sich bekannte Weise von einem nicht dargestellten Dampfturbinen-Leistungsregler angesteuert. Der entspannte Dampf wird in einen Kondensator 203 geleitet, und dort kondensiert. Das Kondensat, welches in Abhängigkeit von der Kondensatortemperatur bei einem Druck von rund 30-50 mbar vorliegt, wird von einer Kondensatpumpe 205 in den Speisewasserbehälter 204 gefördert, der, wie unten dargelegt, vorliegend gleichzeitig als Entgaser dient. Die Kesselspeisepumpe 217 fördert das Kondensat, welches im Speisewasserbehälter typischerweise einen Druck im Bereich von 2 bis 5 bar aufweist, auf den Frischdampfdruck und in den Dampferzeuger, der, was dem Fachmann ebenfalls geläufig ist, in der Reihenfolge Vorwärmer, Verdampfer, Überhitzer durchströmt wird, womit der Kreislauf geschlossen wird. Dem Fachmann sind zahlreiche Abwandlungen des dargestellten Kreislaufs geläufig, was im Detail jedoch nicht primär erfindungswesentlich ist. Vorliegend wird ein teilentspannter Dampfmassenstrom 207 aus der Dampfturbine entnommen und als Entgasungsmedium dem Speisewasserbehälter 204 zugeführt. Dieses kann auch genutzt werden, um das Speisewasser auf eine Temperatur vorzuwärmen, die eine Taupunktsunterschreitung der Gasturbogruppen-Rauchgase im Bereich im Bereich des Vorwärmers 211 zu vermeiden vermag. Der Speisewasserbehälter weist weiterhin eine Niveauregulierung auf, welche Wasserverluste aufgrund von unvermeidlichen Leckagen oder beim Entgasen des Kondensats auszugleichen vermag. Die Niveaumessung regelt ein Zulaufventil 206, welches die Zufuhr von Zusatzwasser von einer Wasseraufbereitungsanlage 216 steuert. Die Niveauregelung kann kontinuierlich oder auch im Sinne einer Zweipunktregelung erfolgen. Erfindungsgemäss zweigt stromab einer Pumpe bei geeignetem Druck, beispielsweise stromab der Kesselspeisepumpe 217, eine Leitung 14 aus dem Wasser-Dampf-Kreislauf ab, welche zu der Zerstäubungsvorrichtung 11 führt. Damit entfällt der Aufwand, spezielle Pumpen und eine gesonderte Wasseraufbereitung für das sogenannte Fogging/Overfogging, also die Eindüsung von Flüssigkeit stromauf des Verdichters, bereitzustellen.

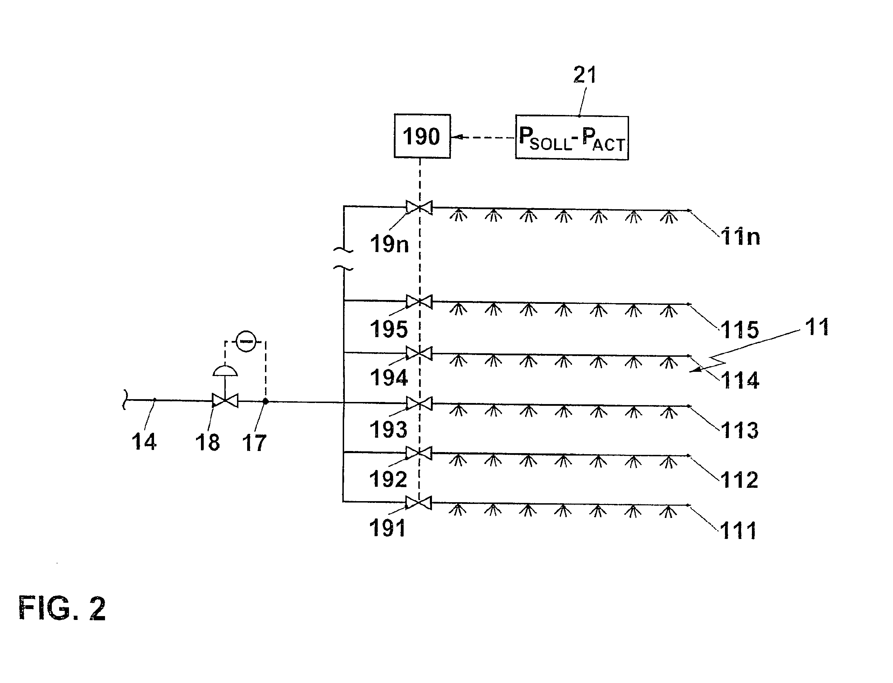

Zur weiteren Erläuterung der Stellelemente 18 und 19 sowie der Druckmessstelle 17 wird Figur 2 herangezogen. Die Einspritzvorrichtung 11 umfasst eine Mehrzahl von Düsenrohren 111 bis 11 n. Diese werden über Absperrorgane 191 bis 19n selektiv zu- und abgeschaltet. Jedes Düsenrohr 111 bis 11 n trägt eine Anzahl nicht einzeln dargestellter, dem Fachmann aber geläufiger Zerstäuberdüsen. Im Falle von Druckzerstäuberdüsen ist die Feinheit des erzeugten Flüssigkeitsnebels massgeblich vom Zerstäubungsvordruck abhängig. In der Leitung 14 ist daher ein Druckregelventil 18 angeordnet. Dieses öffnet und schliesst in Abhängigkeit von einem an der Druckmessstelle 17 bestimmten Druck, um diesen konstant zu halten. Der Flüssigkeitsmassenstrom wird sodann von den freien Strömungsquerschnitten, also der Anzahl der mit Flüssigkeit beaufschlagten Düsenrohre, massgeblich bestimmt. Ein Funktionsblock 21 erfasst die Ist-Leistung P_{ACT} des Generators und einen Leistungssollwert P_{Soll} und bildet daraus die Soll-Istwert-Abweichung P_{Soll} - P_{ACT}. Die Soll-Istwert-Abweichung wird an eine Steuereinheit 190 weitergeleitet. Bei einer positiven Abweichung wird selektiv wenigstens eines der Absperrorgane 191, 192, ..., 19n geöffnet, damit wenigstens ein Düsenrohr zusätzlich mit Flüssigkeit beaufschlagt, und bei gleichbleibendem Vordruck der eingedüste Flüssigkeitsmassenstrom erhöht.

Im Rückgriff auf die Figur 1 ist also das Stellorgan 18 dafür vorgesehen, den Zerstäubungsvordruck konstant zu halten, oder wenigstens innerhalb eines Sollwertbereiches zu halten. Das Stellorgan 19, vorliegend also eine Ventilgruppe, steuert den Massenstrom der einzudüsenden Flüssigkeit. Auf die dargestellte Art sind die Steuerung des Massenstroms und des Flüssigkeitsvordrucks aufs vorteilhafteste voneinander entkoppelt. Der in der Zerstäubungsvorrichtung 11 einzudüsende Flüssigkeitsmassenstrom wird von der Wasseraufbereitungsanlage 216 bereitgestellt. Die Regelung des bereitzustellenden Wassermassenstroms erfolgt durch die Niveauregelung im Speisewasserbehälter 204, welche dafür Gewähr leistet, dass der Massenstrom, welcher zur Zerstäubung im Ansaugtrakt der Gasturbogruppe dem Wasser-Dampf-Kreislauf entnommen wird, durch Zufuhr aus der Wasseraufbereitungsanlage 216 ersetzt wird.

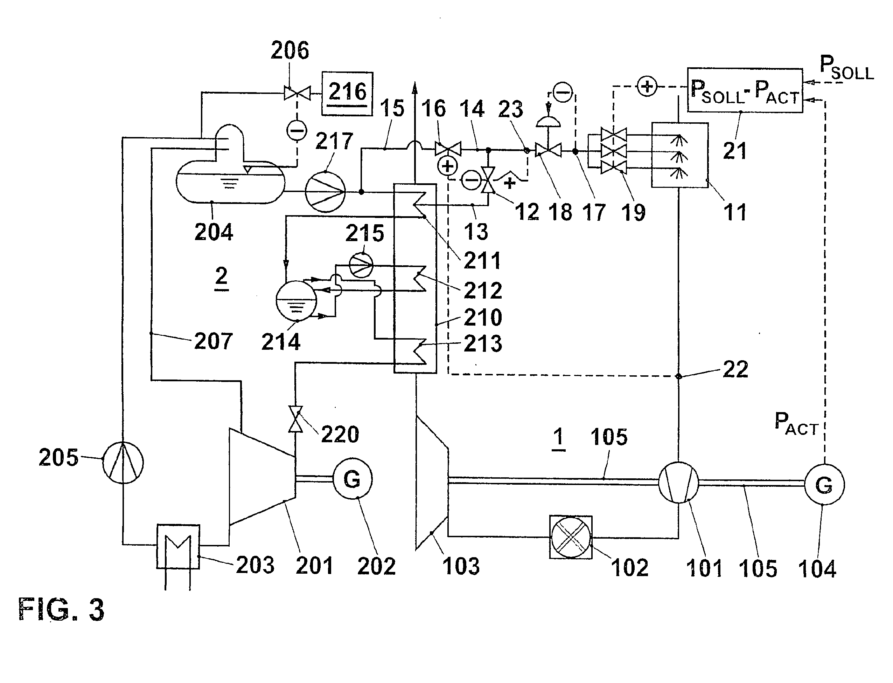

Eine weitere Ausführungsform der Erfindung ist in Figur 3 dargestellt. Neben einer ersten Abzweigleitung 15, welche stromab der Speisepumpe 7 und stromauf des Dampferzeugers 210 aus dem Wasser-Dampf-Kreislauf abzweigt, zweigt im Strömungsweg des Dampferzeugers, vorliegend im Vorwärmer 211, eine zweite Abzweigleitung 13 aus dem Wasser-Dampf-Kreislauf ab. Beide Abzweigleitungen münden in einer gemeinsamen Zuführleitung 14 zur Zerstäubungsvorrichtung 11. Die Vermischung von vorgewärmtem und nicht vorgewärmtem Medium erfolgt also stromauf der Zerstäubungseinrichtung, was diese Ausführungsform besonders im Zusammenhang mit nicht hilfsmedienunterstützten Zerstäubern vorteilhaft gestaltet. Stellorgane 12 und 16 ermöglichen eine Verstellung der relativen Massenströme der nicht vorgewärmten Flüssigkeit in der Abzweigleitung 15 und der vorgewärmten Flüssigkeit in der Abzweigleitung 13, und damit eine Einstellung der Temperatur der Flüssigkeit in der Zuführleitung 14. Im Zuströmkanal der Gasturbogruppe, möglichst unmittelbar vor dem Verdichtereinlass, ist eine Temperaturmessstelle 22 angeordnet, welche die Temperatur der feuchten Luft oder des Luft-Tropfen-Gemisches bestimmt. Aufgrund der Verdunstungswirkung und der Beschleunigung der Strömung zum Verdichtereinlass hin kann die Temperatur an dieser Stelle erheblich unter der Umgebungstemperatur liegen. Abhängig von diesen Messwerten werden die Stellorgane 12 und 16 angesteuert. Dies regelt aber nur die Massenstromverhältnisse von vorgewärmtem und nicht vorgewärmtem Fluid; der Gesamtmassenstrom wird weiterhin auf die oben beschriebene Weise durch die Absperrorgane 19 und den Regler 21 in Abhängigkeit von der Nettoleistung der Gasturbogruppe gesteuert. In einem ersten Betriebszustand ist das Stellorgan 12 vollständig geschlossen. Der gesamte Massenstrom der Zerstäubungsvorrichtung 11 wird ohne Erwärmung durch die erste Abzweigleitung 15 geleitet. Damit wird eine maximale Abkühlung der Ansaugluft der Gasturbogruppe erreicht, weil die eingedüste Flüssigkeit die niedrigstmögliche Temperatur aufweist. Wenn die an der Messstelle 22 gemessene Temperatur nunmehr einen bestimmten Wert, beispielsweise 7°C oder 5°C unterschreitet, wird das Stellorgan 12 ein Stück geöffnet, und Stellorgan 16 ein Stück geschlossen. Damit strömt ein Teil des einzudüsenden Wassers in den Vorwärmer 211 des Dampferzeugers 210 und wird dort erwärmt. Die Temperatur des einzudüsenden Wassers wird damit erhöht, und in der Konsequenz steigt die Temperatur am Verdichtereintritt an. Eine weitere Temperaturmessstelle 23 ist stromauf der Zerstäubungsvorrichtung und stromab der Zusammenführung der vorgewärmten und der nicht vorgewärmten Flüssigkeit angeordnet. Wenn die dort gemessene Zerstäubungstemperatur einen bestimmten Sicherheitsabstand von beispielsweise 5°C oder 8°C zur Siedetemperatur der Flüssigkeit bei Umgebungsdruck unterschreitet, wird das Stellorgan 12 geschlossen. Auf Meereshöhe und bei Betrieb mit Wasser liegt der kritische Temperaturmesswert also im Bereich von rund 90°C bis 95 °C, bei hochgelegenen Installationen entsprechend niedriger. Diese Grenzwertregelung kann zwar zu Einschränkungen des Betriebes führen, verhindert aber schwerwiegende Kavitationsschäden, welche an nicht speziell vorbereiteten Einspritzdüsen auftreten würden, wenn die Flüssigkeit beim Austritt aus der Düse spontan siedet. Die beschriebene Temperaturregelung ist besonders interessant bei Gasturbogruppen, welche an Orten installiert werden, wo an sich kein sogenanntes dem Fachmann geläufiges Anti-Icing System erforderlich ist, an denen aber durch den Fogging oder High Fogging Betrieb eine Unterschreitung der Eisbildungstemperatur auftreten kann. Bei einem vorbestimmten eingespritzten Flüssigkeitsmassenstrom und einer limitierten Flüssigkeitstemperatur ist die auf diese Weise erzielbare Temperaturerhöhung selbstverständlich begrenzt. Eine absolute Temperaturerhöhung der Luft ist auch nur dann realisierbar wenn der Massenstrom der Flüssigkeit, welche als Tropfen mitgeführt werden, um ein Vielfaches über dem verdampften Flüssigkeitsmassenstrom liegt, damit die zusätzlich eingebrachte fühlbare Wärme die Verdunstungswärme überschreitet. In jedem Falle lässt sich aber der Umgebungstemperaturbereich, in dem eine Fogging oder High Fogging-Installation betrieben werden kann, erweitern. Wenn ein Unterschreiten der minimal zulässigen Temperatur am Verdichtereintritt nicht mehr vermieden werden kann, muss die Zerstäubungsvorrichtung 11 selbstverständlich ausser Betrieb genommen werden. In diesem Sinne dient die Vorwärmung der einzudüsenden Flüssigkeit also nicht als absolutes Anti Icing im herkömmlichen Sinne, sondern dient dazu, den Betriebbereich der Zerstäubungsvorrichtung zu erweitern.

In einer weiteren Betriebsweise kann die Zerstäubungsvorrichtung auch als "echtes" Anti Icing System betrieben werden. Dazu muss allerdings die Massenstromregelung von der Leistungsregelung entkoppelt werden, und der Massenstrom muss mit dem Messwert der Messstelle 22 als Regelgrösse betrieben werden. Ein absoluter Temperaturhub ist aber nur dann möglich, wenn tatsächlich soviel erwärmte Flüssigkeit eingedüst wird, dass die Luft am Verdichtereintritt übersättigt ist, also Tropfen mit in den Verdichter eintreten. Auf diese Weise kann bei Installationen, welche ein Anti-Icing an sich nicht oder nur an wenigen Tagen im Jahr benötigen, der Betrieb sichergestellt werden ohne eine aufwändige Anti Icing Vorrichtung speziell anordnen zu müssen.

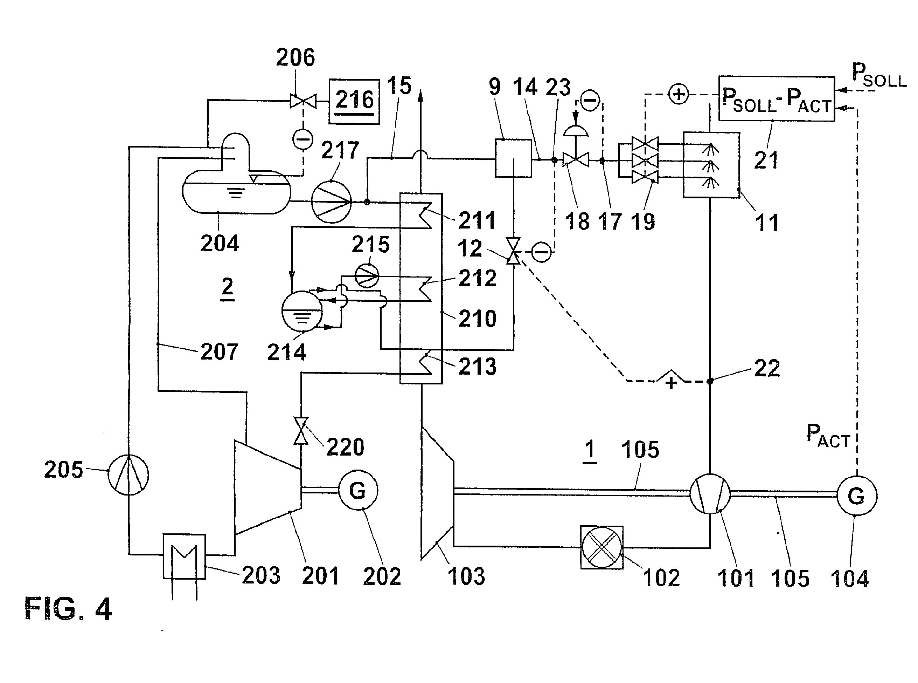

Die Ausführungsform gemäss Figur 4 unterscheidet sich von dem in Figur 3 dargestellten Beispiel unter anderem darin, dass die vorgewärmten und nicht vorgewärmten Massenstromanteile auf eine Konstanthaltung der Zerstäubungstemperatur, gemessen mit der Messstelle 23, geregelt werden. Dies ist ganz besonders von Vorteil, wenn die Zerstäubungsvorrichtung 11 mit Flash-Zerstäubern arbeitet. Dabei wird die Flüssigkeit unter Druck bei einer Temperatur zugeführt, welche beim Austritt aus einer Zerstäuberdüse und der damit einhergehenden Dekompression auf Umgebungsdruck zum spontanen Sieden und damit aufgrund des Dampfdruckes zum Aufplatzen der Tropfens in kleine Fragmente führt. Dies ist in WO 9967519 beschrieben. Neben dem Zerstäubungsvordruck ist hierbei auch der Dampfdruck der Flüssigkeit für die Zerstäubungsgüte von zentraler Bedeutung, weshalb hierbei eine Regelung der Temperatur der zu zerstäubenden Flüssigkeit auf einen Sollwert sehr von Vorteil ist. Weiterhin unterscheidet sich die hier dargestellte Ausführungsform von der in Figur 3 dargestellten dadurch, dass die erste Abzweigleitung 15 und die Heizmedienleitung mit dem Stellorgan 12 nicht unmittelbar in der Zuführleitung 14 münden, sondern in einem Mischvorwärmer 9, der seinerseits eine Mündung in die Zuführleitung 14 aufweist. In der ersten Abzweigleitung 15 geführtes Wasser wird im Mischvorwärmer 9 mit einem im Abhitzedampferzeuger 210 entnommenen und über die Heizmedienleitung geführten Heizmedium vermischt und dabei erwärmt. Das Heizmedium wird im dargestellten Beispiel als überhitzter Dampf im Überhitzer 213 entnommen. Diese Ausführungsform zeichnet sich besonders dann, wenn zur Flash-Zerstäubung ein wesentlicher Temperaturhub erforderlich ist, dadurch aus, dass der Heizmedien-Massenstrom vergleichsweise gering ausfallen kann. Selbstverständlich ist es auch möglich, die Heizmedienleitung an der Dampftrommel 214 zur Entnahme von Sattdampf oder Sattwasser anzuordnen. Eine weitere mögliche Ausführungsform zeichnet sich dadurch aus, dass im Verdampfer 212 Siedewasser oder ein Siedewasser-Sattdampfgemisch entnommen wird. In einer weiteren Ausführungsform wird aus dem Vorwärmer 211 erhitztes Wasser als Heizmedium entnommen. Die Auswahl der Entnahmestelle ist letzten Endes vom Fachmann unter Zuhilfenahme seines Fachwissens und unter Beachtung der thermodynamischen Randbedingungen vorzunehmen. Die exemplarisch dargestellte Verwendung energetisch hochwertigen Dampfes als Heizmedium ermöglicht eine grosse Temperaturerhöhung bei geringem Heizmedienmassenstrom. Die Verwendung eines niedrigwertigeren Heizmediums hingegen erfordert einen höheren Heizmedienmassenstrom, erleichtert aber andererseits eine präzise Temperaturregelung, da ein Regeleingriff auf den Heizmassenstrom dann selbstverständlich weniger stark auf die als Regelgrösse herangezogene Temperatur wirkt. Weiterhin ist bei der dargestellten Ausführungsform nur in der Heizmedienleitung ein Stellorgan 12 angeordnet. Dies erleichtert die Regelung, da nur auf ein Stellorgan eingegriffen werden muss; allerdings kann der nicht vorgewärmte Massenstrom durch die erste Abzweigleitung 15 nicht getrennt geregelt und damit faktisch auch nicht abgestellt werden. Die mittels der Messstelle 22 ermittelte Temperatur im Zuströmkanal wird als Regelgrösse einer Grenzregelung verwendet. Wenn diese einen zulässigen Maximalwert überschreitet, muss die Temperatur der Zerstäubungsflüssigkeit vermindert werden. Dies geschieht, indem das Stellorgan 12 geschlossen wird. Fallweise müssen dann auch weitere Schutzmassnahmen ergriffen werden, bis hin zur Ausserbetriebnahme der Flüssigkeitseindüsung im Zuströmkanal. Es versteht sich von selbst, dass die in Figur 4 dargestellte Schaltung der Abzweigleitungen auch zur Regelung der Temperatur im Zuströmkanal oder Verdichtereinlass herangezogen werden kann.

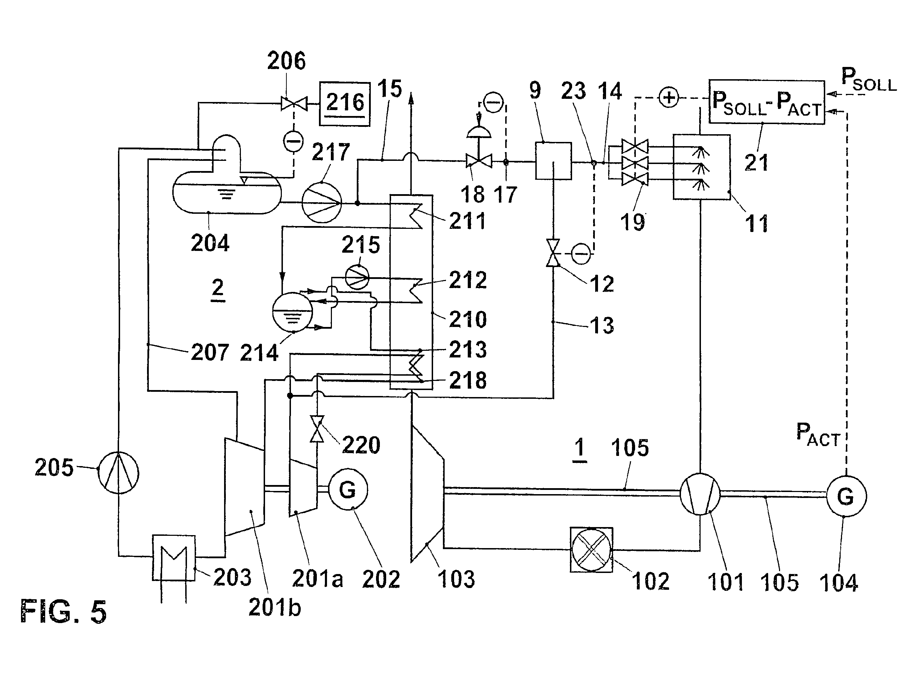

Bei der Ausführungsform gemäss Figur 5 wird als Heizmedium Anzapfdampf aus der Dampfturbine verwendet. Dabei muss der Mischvorwärmer 9 selbstverständlich stromab des Druckregelventils 18 angeordnet sein, und der Druck muss auf einen Wert eingeregelt sein, der unterhalb des Druckes an der Anzapfstelle des Wasser-Dampf-Kreislaufs liegt. In einer Vielzahl der Fälle wird es nicht wirtschaftlich sein, speziell eine Anzapfstelle an der Dampfturbine anzuordnen. Es ist daher ein Wasser-Dampf-Kreislauf mit Zwischenüberhitzung dargestellt. Die Dampfturbine besteht dabei aus einer Hochdruckdampfturbine 201 a und einer Mittel-/Niederdruckdampfturbine 201 b. Frischdampf aus dem Überhitzer 213 wird in der Hochdruckturbine 201 a in etwa bis zum Sattdampfzustand entspannt, und dann in einem Zwischenüberhitzer 218 wieder in etwa auf Frischdampftemperatur gebracht und in der Mittel-/Niederdruckturbine 201 b auf Kondensatordruck entspannt. Es kann sich hier besonders einfach im Bereich des Zwischenüberhitzers 218 die zweite Abzweigleitung 13 anschliessen. Dabei wird Sattdampf am Austritt aus der Hochdruckturbine 201 a entnommen, wie dargestellt, oder überhitzter Dampf am Eintritt in die Mittel-/Niederdruckturbine 201 b. Die Abzweigeleitung kann auch am Zwischenüberhitzer 218 anschliessen, jedoch ist ein Zugang in den Abhitzedampferzeuger apparativ aufwändiger zu realisieren als ein Anschluss an ausserhalb des Kessels verlaufende Zu- und Abströmleitungen.

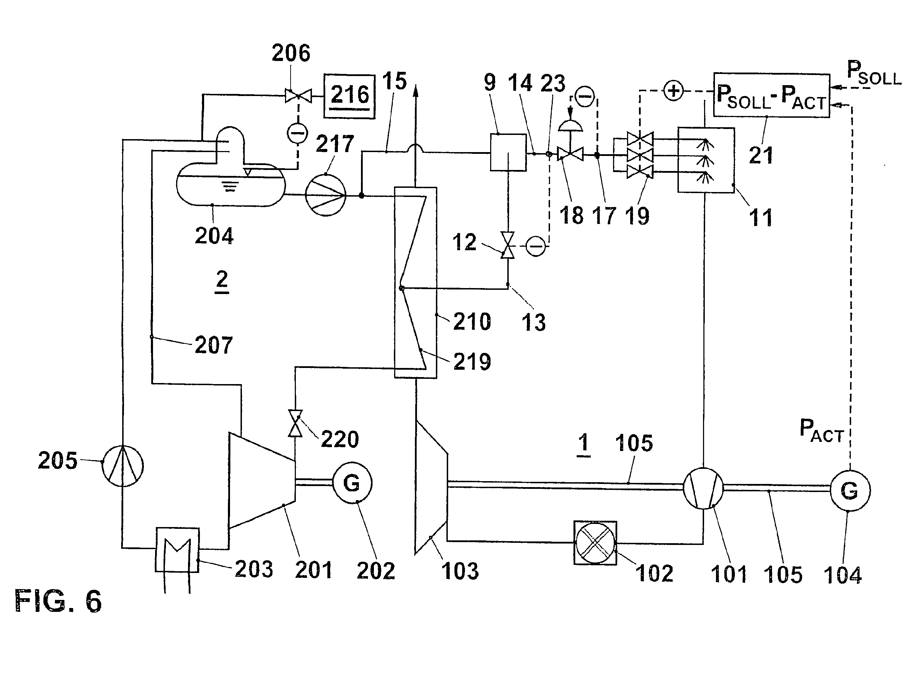

In Figur 6 ist eine der Anordnung aus Figur 4 analoge Ausführungsform der Erfindung mit einem Eindurchlauf ("Once Through") Abhitzedampferzeuger dargestellt. Eindurchlauf-Dampferzeuger zeichnen sich dadurch aus, dass sie keine getrennten Wärmetauscherberohrungen für die Vorwärmung, Verdampfung und Überhitzung aufweisen, sondern im wesentlichen in einer Wärmetauschereinheit das Speisewasser erwärmt, verdampft und der entstehende Dampf überhitzt wird. Dies erfordert einen etwas höheren regelungstechnischen Aufwand, der aber durch den deutlich geringen apparativen Aufwand kompensiert wird, weshalb diese Kesselbauart in Kombianlagen häufig Anwendung findet, und in ihren Details dem Fachmann geläufig ist. Wie im Zusammenhang mit Figur 4 dargelegt, zweigt stromab der Kesselspeisepumpe 7 und stromauf des Kessels eine erste Abzweigleitung 15 aus dem Wasser-Dampf-Kreislauf ab, welche in einem Mischvorwärmer 9 mündet. Innerhalb des Abwärmedampferzeugers zweigt an einer entsprechend des gewünschten Zustandes des Heizmediums zu wählenden Stelle eine zweite Abzweigleitung 13 für das Heizmedium ab, wobei der Massenstrom des Heizmediums über das Stellorgan 12 steuerbar ist. Bezüglich der Regelung oder Steuerung des Heizmedienmassenstroms gelten analog die in Verbindung mit den Figuren 3 und 4 dargelegten Überlegungen. Analog zu den Ausführungen zu Figur 4 kann das Heizmedium erhitztes Wasser, Siedewasser, Sattdampf oder überhitzter Dampf sein; die Anzapfstelle der Wärmetauscherberohrung ist entsprechend zu wählen.

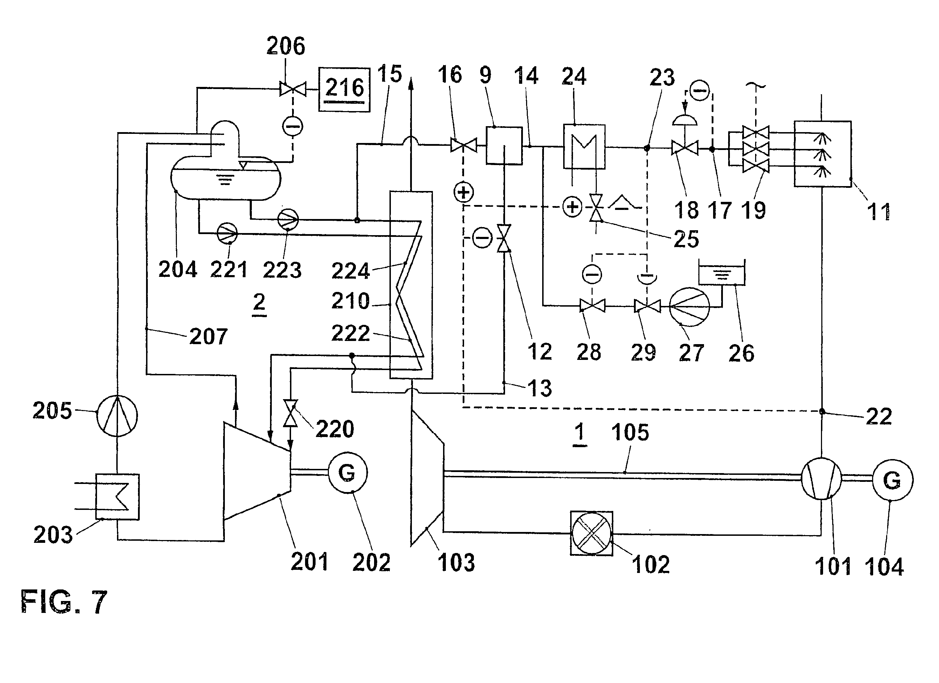

Die in Figur 7 dargestellte Ausführungsform weist einen Zweidruck-Wasser-Dampf-Kreislauf auf, wobei der Abhitzedampferzeuger als Zweidruck-Eindurchlaufkessel ausgeführt ist. Vom Speisewasserbehälter 204 zweigt ein Hochdruckzweig mit der Hochdruckspeisepumpe 221 und der Hochdruck-Dampferzeugerberohrung 222 sowie ein Mittel-/Niederdruckzweig mit der Mittel-/Niederdruckspeisepumpe 223 und der Mittel-/Niederdruck-Dampferzeugerberohrung 224 ab. Der erzeugte Hochdruckdampf wird über die gesamte Dampfturbine 201 entspannt, während der Mittel-/Niederdruckzweig an einer weiter stromab der Dampfturbine gelegenen Zwischeneinspeisung, an einer Stelle angepassten Druckes, in diese mündet. Diese Schaltungsvariante eines Wasser-Dampf-Kreislaufes ist dem Fachmann an sich geläufig, und bedarf daher keiner weiteren Erläuterungen. Des weiteren gelten die oben gemachten Darlegungen zur Funktion der Komponenten des Wasser-Dampf-Kreislaufs. Wenn der Frischdampfdruck des Wasser-Dampf-Kreislaufes erheblich über dem notwendigen Zerstäubervordruck der Zerstäubungsvorrichtung 11 liegt, muss das Druckregelventil 18 sehr viel Druck abbauen. Dies ist für Druckzerstäubungsvorrichtungen besonders bei hohen Frischdampfdrücken der Fall, aber auch bei der Verwendung hilfsmedienunterstützter Zerstäuber oder beispielsweise Rotationszerstäubern, und gegebenenfalls auch bei der Anwendung der Flash-Zerstäubung. Abhängig vom einzudüsenden Wassermassenstrom und dem notwendigen Druckabbau kann dies zwar vergleichsweise geringe, aber immerhin spürbare Auswirkungen auf den Eigenenergieverbrauch und damit auf den Wirkungsgrad der Kraftwerksanlage haben; beispielsweise entspricht bei einem Wassermassenstrom von 25 kg/s eine Drosselung um 50 bar einer nutzlos verheizten Leistung von rund 125 kW. Es ist also erstrebenswert, die Abzweigestellen für die Anspeisung der Zerstäubungsvorrichtung 11 möglichst bei angepasstem Druck anzuordnen. Dies ist im Ausführungsbeispiel realisiert, indem die Abzweigungen im Mittel-/Niederdruckzweig angeordnet sind. Stromab der Mittel-/Niederdruckspeisepumpe 223 und stromauf der Mittel-/Niederdruck-Dampferzeugerberohrung zweigt eine erste Abzweigleitung 15 vom Wasser-Dampf-Kreislauf ab; diese führt nicht vorgewärmtes Druckwasser über ein Regelorgan 16 zum Mischvorwärmer 9. Eine zweite Abzweigleitung 13 zweigt innerhalb des Kessels von der Wärmetauscherberohrung ab, oder, wie dargestellt, stromab davon. Letztere Variante ist im Allgemeinen leichter realisierbar, weil kein Zugang in den Kessel geschaffen werden muss. Es ist durchaus auch möglich, dass eine Abzweigleitung unmittelbar stromab der Kondensatpumpe 205 aus dem Wasser-Dampf-Kreislauf abzweigt, wenn der dort vorherrschende Druck mit dem geforderten Flüssigkeitsvordruck der Zerstäubungsvorrichtung kompatibel ist; dies ist beispielsweise bei der Verwendung hilfsmedienunterstützter Zerstäuber der Fall, wo kein hoher Flüssigkeits-Vordruck gefordert ist. Selbstverständlich könnte auch eine dort abzweigende Leitung über einen im Bereich des Abhitzedampferzeugers angeordneten separaten Wärmetauscher geführt werden. Die zweite Abzweigleitung 13 führt über das Stellorgan 12 einen regelbaren Massenstrom überhitzten Dampfes als Heizmedium zum Mischvorwärmer 9. Aus dem Mischvorwärmer 9 strömt vorgewärmtes Wasser in die Zuführleitung 14. Weiterhin ist in der Ausführungsform gemäss Figur 7 in der Flüssigkeitsleitung 14 ein Kühler 24 angeordnet. Der Kühlmittelzustrom zu dem Kühler 24 und damit dessen Kühlungsleistung wird durch das Stellorgan 25 gesteuert. Im Zusammenspiel der Stellorgane 12 und 16 ist es, wie im Zusammenhang mit Figur 3 dargelegt, möglich, die mittels der Temperaturmessstelle 22 erfasste Temperatur im Zuströmkanal vor dem Verdichtereintritt auf einen Mindestwert zu regeln. Es ist weiterhin möglich, wenigstens innerhalb gewisser Grenzen durch ein Abkühlen der Flüssigkeit im Kühler 24 die mittels der Messstelle 22 erfasste Temperatur im Zuströmkanal abzusenken. Es ist also zum Beispiel möglich, die Temperatur an der Messstelle 22 auf einen möglichst niedrigen Wert oberhalb der Eisbildungstemperatur einzuregeln. Grenzen sind dadurch gesetzt, dass die Temperatur an der Messstelle 23 immer oberhalb der Gefriertemperatur der Flüssigkeit bleiben muss. Für reines Wasser sind der zusätzlichen Ansaugluftkühlung durch Vorkühlung der zu zerstäubenden Flüssigkeit recht enge Grenzen gesetzt. Eine Massnahme ist das Zudosieren von Alkoholen oder anderen geeigneten Frostschutzadditiven stromauf des Kühlers. In der Ausführungsform gemäss Figur 7 ist ein Additivtank 26 angeordnet, von dem aus über eine Pumpe 27, ein Absperrventil 29, sowie ein Stellorgan 28 der Zerstäubungsflüssigkeit stromauf des Kühlers 24 bei Bedarf ein geeignetes Additiv zugemischt werden kann. Wenn die Temperatur an der Messstelle 23 einen Grenzwert unterschreitet, wird das Absperrorgan 29 geöffnet. Das Stellorgan 28 wird so geregelt, dass der geförderte Additivmassenstrom mit sinkender Temperatur gemäss einem vorgegebenen Additivkonzentrations-Temperatur-Verlauf steigt. Es ist auf diese Weise möglich, eine maximal zulässige Abkühlung der Luft am Verdichtereintritt bei gleichzeitiger Übersättigung der Luft mit Feuchte und dem daraus resultierenden Innenkühlungseffekt im Verdichter zu erzielen. Damit kann die Netto-Leistungsabgabe der Gasturbogruppe, welche zum Antrieb des Generators dient, maximiert werden.

Unter Anwendung der Erfindung ist es möglich, bei Kombikraftwerksanlagen auf einfache Weise eine Zerstäubungsvorrichtung für Fogging oder High Fogging stromauf des Verdichters vorzusehen und besonders bei bestehenden Anlagen nachzurüsten. Dabei werden die ohnehin vorhandenen Wasseraufbereitungs- und Pumpenkapazitäten für den Betrieb der Zerstäubungsvorrichtung mit verwendet. Dies ist vor allem vor dem Hintergrund günstig, als die vorhandenen Vorrichtungen in der Regel ohnehin gewisse Überkapazitäten aufweisen. Insbesondere dann, wenn die Abzweigstellen an Rohrleitungen oder Komponenten des Wasser-Dampf-Kreislaufes angeordnet werden, die ausserhalb des Abhitzedampferzeugers liegen, kann eine Nach - oder Umrüstung bestehender Anlagen mit besonders geringem technischem und finanziellem Aufwand erfolgen, weil einerseits ohnehin vorhandene Komponenten verwendet werden, und andererseits vorhandene oder leicht zu schaffende Zugänge für die Abzweigung der zusätzlich anzuordnenden Leitungen genutzt werden.

### Bezugszeichenliste

- 1: Gasturbogruppe
- 2: Dampfturbogruppe
- 6: Vorrichtung zur Bereitstellung einer Flüssigkeit, Wasseraufbereitungsanlage
- 9: Mischvorwärmer
- 11: Zerstäubungsvorrichtung, Vernebelungsvorrichtung
- 12: Absperr- und/oder Drosselorgan, Stellorgan
- 13: Abzweigleitung, zweite Abzweigleitung
- 14: Zuführleitung
- 15: Abzweigleitung, erste Abzweigleitung
- 16: Absperr- und/oder Drosselorgan, Stellorgan
- 17: Druckmessstelle
- 18: Druckregelventil
- 19: Massenstrom-Stellorgan, Steuerblock, Absperrventile
- 21: Funktionsblock, Regler
- 22: Temperaturmessstelle
- 23: Temperaturmessstelle
- 24: Kühler
- 25: Stellorgan
- 26: Additivtank
- 27: Förderpumpe
- 28: Stellorgan
- 29: Absperrorgan
- 101: Verdichter
- 102: Brennkammer
- 103: Turbine
- 104: Generator
- 105: Welle
- 111, 112, ..., 11n: Düsenrohre
- 191, 192, ..., 19n: Absperrorgane
- 190: Funktionsblock
- 201: Dampfturbine
- 201 a: Hochdruck-Dampfturbine
- 201 b: Mittel-/Niederdruckdampfturbine
- 202: Generator
- 203: Kondensator
- 204: Speisewasserbehälter, Speisewasserbehälter/Entgaser
- 205: Kondensatpumpe
- 206: Stellorgan
- 207: Dampfentnahme
- 210: Abhitzedampferzeuger, Kessel
- 211: Vorwärmer
- 212: Verdampfer
- 213: Überhitzer, Hochdrucküberhitzer
- 214: Trommel
- 215: Umwälzpumpe
- 216: Wasseraufbereitungsanlage
- 217: Kesselspeisepumpe
- 218: Mittel-/Niederdrucküberhitzer
- 219: Wärmetauscherberohrung, Dampferzeugerberohrung
- 220: Frischdampf-Regelventil
- 221: Hochdruck-Speisepumpe
- 222: Hochdruck-Wärmetauscherberohrung,
Hochdruck-Dampferzeugerberohrung
- 223: Mittel-/Niederdruck-Speisepumpe
- 224: Mittel-/Niederdruck-Wärmetauscherberohrung,
Mittel-/Niederdruck-Dampferzeugerberohrung

- P_{ACT}: Ist-Leistung
- P_{SOLL}: Leistungs-Sollwert

## Patentansprüche

1. Kraftwerksanlage, umfassend eine Gasturbogruppe (1) und einen Wasser-Dampf-Kreislauf (2), welcher eine Dampfturbine (201), einen stromab einer Turbine (103) der Gasturbogruppe angeordneten Abhitzedampferzeuger (210), einen stromab der Dampfturbine angeordneten Kondensator (203), sowie eine stromab des Kondensators und stromauf des Abhitzedampferzeugers angeordnete Pumpe (205, 217, 221, 223) einschliesst,
und welche Kraftwerksanlage weiterhin einen stromauf eines Verdichters (101) der Gasturbogruppe angeordneten Zuströmkanal für dem Verdichter zuströmende Luft umfasst, in welchem Zuströmkanal eine Zerstäubungsvorrichtung (11) für eine Flüssigkeit angeordnet ist, **dadurch gekennzeichnet, dass** stromab der Pumpe wenigstens eine zu der Zerstäubungsvorrichtung (11) führende Leitung (13, 14, 15) aus dem Wasser-Dampf-Kreislauf abzweigt.

2. Kraftwerksanlage nach Anspruch 1, **dadurch gekennzeichnet, dass** eine Leitung (14, 15) stromauf des Abhitzedampferzeugers (210) aus dem Wasser-Dampf-Kreislauf abzweigt.

3. Kraftwerksanlage nach einem der vorstehenden Ansprüche, **dadurch gekennzeichnet, dass** eine Leitung (13) im Strömungsweg des Abhitzedampferzeugers aus dem Wasser-Dampf-Kreislauf abzweigt.

4. Kraftwerksanlage nach einem der vorstehenden Ansprüche, **dadurch gekennzeichnet, dass** eine Leitung (13) stromab des Abhitzedampferzeugers aus dem Wasser-Dampf-Kreislauf abzweigt.

5. Kraftwerksanlage nach einem der Ansprüche 3 oder 4, wobei der Abhitzedampferzeuger einen Vorwärmer (211), eine Dampftrommel (214), einen Verdampfer (212), und einen Überhitzer (213) aufweist, **dadurch gekennzeichnet, dass** eine Leitung stromauf der Dampftrommel oder in der Dampftrommel aus dem Strömungsweg des Wasser-Dampf-Kreislaufs abzweigt.

6. Kraftwerksanlage nach einem der vorstehenden Ansprüche, **dadurch gekennzeichnet, dass** eine erste Abzweigleitung (15) an einer ersten Stelle des Wasser-Dampf-Kreislaufs aus dem Wasser-Dampf-Kreislauf abzweigt, eine zweite Abzweigleitung (13) an einer im Wasser-Dampf-Kreislauf stromab der ersten Stelle gelegenen zweiten Stelle aus dem Wasser-Dampf-Kreislauf abzweigt, und beide Abzweigleitungen in einer gemeinsamen zur Zerstäubungsvorrichtung führenden Zuführleitung (14) münden.

7. Kraftwerksanlage nach Anspruch 6, **dadurch gekennzeichnet, dass** die erste Stelle stromauf des Abhitzedampferzeugers angeordnet ist, und die zweite Stelle im Abhitzedampferzeuger oder stromab davon angeordnet ist.

8. Kraftwerksanlage nach einem der Ansprüche 6 oder 7, **dadurch gekennzeichnet, dass** die Abzweigleitungen (13, 15) in einen Mischvorwärmer (9) münden, dessen Abströmung zur Zuführleitung (14) führt.

9. Kraftwerksanlage nach einem der Ansprüche 6 bis 8, **dadurch gekennzeichnet, dass** die erste Stelle derart gewählt ist, dass im Strömungsweg an der Abzweigstelle flüssiges Wasser vorliegt, und die zweite Stelle so gewählt ist, dass im Strömungsweg an der Abzweigstelle Dampf vorliegt.

10. Kraftwerksanlage nach einem der Ansprüche 6 bis 9, **dadurch gekennzeichnet, dass** wenigstens eine der Abzweigleitungen (13, 15) ein Absperr- und/oder Drosselorgan (12, 16) aufweist.

11. Kraftwerksanlage gemäss einem der vorstehenden Ansprüche, **dadurch gekennzeichnet**, das in der zu der Zerstäubungsvorrichtung führenden Leitung (14) ein Druckregelventil (18) zur Regelung des Zerstäubungsvordrucks angeordnet ist.

12. Kraftwerksanlage gemäss einem der vorstehenden Ansprüche, **dadurch gekennzeichnet, dass** in der Zuführleitung (14) ein Kühler (24) angeordnet ist.

13. Verfahren zum Betrieb einer Kraftwerksanlage gemäss einem der Ansprüche 6 bis 10, **gekennzeichnet durch** die Schritte:
**durch** die erste Leitung einen ersten, nichtvorgewärmten Teilmassenstrom der gemeinsamen Zuführleitung zuzuführen;
**durch** die zweite Leitung einen zweiten, vorgewärmten Teilmassenstrom der gemeinsamen Zuführleitung zuzuführen; und
wenigstens einen der Teilmassenströme zu variieren.

14. Verfahren gemäss Anspruch 13, **gekennzeichnet durch** die weiteren Schritte, den Massenstrom in der gemeinsamen Zuführleitung zu kühlen; und die Kühlungsleistung zu variieren.

15. Verfahren zum Betrieb einer Gasturbogruppe gemäss Anspruch 12, **gekennzeichnet durch** den Schritt, die Kühlungsleistung des Kühlers zu variieren.

16. Verfahren gemäss einem der Ansprüche 13 bis 15, **gekennzeichnet durch** die weiteren Schritte:
wenigstens eine der folgenden Temperaturen zu messen: Temperatur der zu zerstäubenden Flüssigkeit; und Temperatur im Einlass des Verdichters der Gasturbogruppe;
wenigstens einen Teilmassenstrom und/oder die Kühlungsleistung mit der gemessenen Temperatur als Regelgrösse geregelt zu variieren.

## Claims

1. A power plant, comprising a gas turbo group (1) and a water/steam circuit (2) which includes a steam turbine (201), a waste heat recovery steam generator (210) arranged downstream of a turbine (103) of the gas turbo group, a condenser (203) arranged downstream of the steam turbine, and a pump (205, 217, 221, 223) arranged downstream of the condenser and upstream of the waste heat recovery steam generator, said power plant comprising, furthermore, an inflow duct, arranged upstream of a compressor (101) of the gas turbo group, for air flowing into the compressor, in which inflow duct an atomization device (11) for a liquid is arranged, **characterized in that** at least one line (13, 14, 15) leading to the atomization device (11) branches off from the water/steam circuit downstream of the pump.

2. The power plant as claimed in claim 1, **characterized in that** a line (14, 15) branches off from the water/steam circuit upstream of the waste heat recovery steam generator (210).

3. The power plant as claimed in one of the preceding claims, **characterized in that** a line (13) branches off from the water/steam circuit in the flow path of the waste heat recovery steam generator.

4. The power plant as claimed in one of the preceding claims, **characterized in that** a line (13) branches off from the water/steam circuit downstream of the waste heat recovery steam generator.

5. The power plant as claimed in either one of claims 3 and 4, the waste heat recovery steam generator having a preheater (211), a steam drum (214), an evaporator (212) and a superheater (213), **characterized in that** a line branches off from the flow path of the water/steam circuit upstream of the steam drum or in the steam drum.

6. The power plant as claimed in one of the preceding claims, **characterized in that** a first branch line (15) branches off from the water/steam circuit at a first point of the water/steam circuit, a second branch line (13) branches off from the water/steam circuit at a second point located downstream of the first point in the water/steam circuit, and both branch lines issue in a common supply line (14) leading to the atomization device.

7. The power plant as claimed in claim 6, **characterized in that** the first point is arranged upstream of the waste heat recovery steam generator, and the second point is arranged in the waste heat recovery steam generator or downstream of the latter.

8. The power plant as claimed in either one of claims 6 and 7, **characterized in that** the branch lines (13, 15) issue into a mixing preheater (9), the outflow of which leads to the supply line (14).

9. The power plant as claimed in one of claims 6 to 8, **characterized in that** the first point is selected such that liquid water is present at the branch point in the flow path, and the second point is selected such that steam is present at the branch point in the flow path.

10. The power plant as claimed in one of claims 6 to 9, **characterized in that** at least one of the branch lines (13, 15) has a shut off and/or throttle member (12, 16).

11. The power plant as claimed in one of the preceding claims, **characterized in that** a pressure regulating valve (18) for regulating the atomization admission pressure is arranged in the line (14) leading to the atomization device.

12. The power plant as claimed in one of the preceding claims, **characterized in that** a cooler (24) is arranged in the supply line (14).

13. A method for operating a power plant as claimed in one of claims 6 to 10, **characterized by** the steps:
supplying a first, nonpreheated part mass flow through the first line to the common supply line;
supplying a second, preheated part mass flow through the second line to the common supply line; and
varying at least one of the part mass flows.

14. The method as claimed in claim 13, **characterized by** the further steps of cooling the mass flow in the common supply line and of varying the cooling capacity.

15. The method for operating a gas turbo group as claimed in claim 12, **characterized by** the step of varying the cooling capacity of the cooler.

16. The method as claimed in one of claims 13 to 15, **characterized by** the further steps:
measuring at least one of the following temperatures: temperature of the liquid to be atomized and temperature in the inlet of the compressor of the gas turbo group;
varying in a regulated manner at least one part mass flow and/or the cooling capacity with the measured temperature as the regulating variable.

## Revendications

1. Centrale électrique, comprenant un ensemble turbine à gaz (1) et un circuit eau-vapeur (2), qui inclut une turbine à vapeur (201), un générateur de vapeur par chaleur perdue (210) disposé en aval d'une turbine (103) de l'ensemble turbine à gaz, un condenseur (203) disposé en aval de la turbine à vapeur ainsi qu'une pompe (205, 217, 221, 223) disposée en aval du condenseur et en amont du générateur de vapeur par chaleur perdue,
et laquelle centrale électrique comprend en outre un canal d'afflux disposé en amont d'un compresseur (101) de l'ensemble turbine à gaz pour l'air affluant au compresseur, dans lequel canal d'afflux est disposé un dispositif de pulvérisation (11) pour un liquide,
**caractérisée en ce qu'**en aval de la pompe, au moins une conduite (13, 14, 15) conduisant au dispositif de pulvérisation (11) part du circuit eau-vapeur.

2. Centrale électrique selon la revendication 1, **caractérisée en ce qu'**une conduite (14, 15) en amont du générateur de vapeur par chaleur perdue (210) part du circuit eau-vapeur.

3. Centrale électrique selon l'une quelconque des revendications précédentes, **caractérisée en ce qu'**une conduite (13) dans la voie d'écoulement du générateur de vapeur par chaleur perdue part du circuit eau-vapeur.

4. Centrale électrique selon l'une quelconque des revendications précédentes, **caractérisée en ce qu'**une conduite (13) en aval du générateur de vapeur par chaleur perdue part du circuit eau-vapeur.

5. Centrale électrique selon l'une quelconque des revendications 3 ou 4, dans laquelle le générateur de vapeur par chaleur perdue présente un préchauffeur (211), un tambour à vapeur (214), un évaporateur (212) et un surchauffeur (213), **caractérisée en ce qu'**une conduite en amont du tambour à vapeur ou dans le tambour à vapeur part de la voie d'écoulement du circuit eau-vapeur.

6. Centrale électrique selon l'une quelconque des revendications précédentes, **caractérisée en ce qu'**une première conduite de dérivation (15) à un premier endroit du circuit eau-vapeur par du circuit eau-vapeur, une deuxième conduite de dérivation (13) à un deuxième endroit placé en aval du premier endroit dans le circuit eau-vapeur part du circuit eau-vapeur, et les deux conduites de dérivation débouchent dans une conduite d'alimentation commune (14) conduisant au dispositif de pulvérisation.

7. Centrale électrique selon la revendication 6, **caractérisée en ce que** le premier endroit est disposé en amont du générateur de vapeur par chaleur perdue, et le deuxième endroit est disposé dans le générateur de vapeur par chaleur perdue ou en aval de celui-ci.

8. Centrale électrique selon l'une quelconque des revendications 6 ou 7, **caractérisée en ce que** les conduites de dérivation (13, 15) débouchent dans un préchauffeur de mélange (9), dont la sortie conduit à la conduite d'alimentation (14).

9. Centrale électrique selon l'une quelconque des revendications 6 à 8, **caractérisée en ce que** le premier endroit est sélectionné de telle sorte que dans la voie d'écoulement, au niveau du point de dérivation, il se trouve de l'eau sous forme liquide, et le deuxième endroit est sélectionné de telle sorte que dans la voie d'écoulement, au niveau du point de dérivation, il se trouve de la vapeur.

10. Centrale électrique selon l'une quelconque des revendications 6 à 9, **caractérisée en ce qu'**au moins l'une des conduites de dérivation (13, 15) présente un organe d'arrêt et/ou d'étranglement (12, 16).

11. Centrale électrique selon l'une quelconque des revendications précédentes, **caractérisée en ce qu'**une soupape de régulation de pression (18) pour la régulation de la pré-compression de pulvérisation est disposée dans la conduite (14) conduisant au dispositif de pulvérisation.

12. Centrale électrique selon l'une quelconque des revendications précédentes, **caractérisée en ce qu'**un radiateur (24) est disposé dans la conduite d'alimentation (14).

13. Procédé pour faire fonctionner une centrale électrique selon l'une quelconque des revendications 6 à 10, **caractérisé par** les étapes suivantes :
alimenter, à travers la première conduite, un premier flux massique partiel non préchauffé, à la conduite d'alimentation commune ;
alimenter, à travers la deuxième conduite, un deuxième flux massique partil préchauffé à la conduite d'alimentation commune ; et
faire varier au moins l'un des débits massiques partiels.

14. Procédé selon la revendication 13, **caractérisé par** les autres étapes, consistant à refroidir le flux massique dans la conduite d'alimentation commune ; et à faire varier la puissance de refroidissement.

15. Procédé pour faire fonctionner un ensemble turbine à gaz selon la revendication 12, **caractérisé par** l'étape consistant à faire varier la puissance de refroidissement du radiateur.

16. Procédé selon l'une quelconque des revendications 13 à 15, **caractérisé par** les étapes supplémentaires suivantes :
mesurer au moins l'une des températures suivantes : température du liquide à pulvériser ; et température à l'entrée du compresseur de l'ensemble turbine à gaz ;
faire varier de manière régulée au moins un flux massique partiel et/ou la puissance de refroidissement avec la température mesurée en tant que grandeur de régulation.
